# EUROPEAN PATENT APPLICATION

(11) **EP 1 717 671 A1**
(43) Date of publication of application: **02.11.2006**
(21) Application number: 05009450.7
(22) Date of filing: 29.04.2005
(51) Int. Cl.: G06F 3/033, G06K 9/22

(54) **Method for an appliance system of a vehicle**

(71) Applicant: Ford Global Technologies, LLC., Dearborn MI 48126 (US)
(72) Inventor: Fast, Peder, SE-429 34 (SE)
(74) Representative: Engstrand, Maria Linnéa

(57) **Abstract**

The invention relates to a method for selecting among different aspects in an appliance system of a vehicle by detecting a symbol corresponding to the aspect to be selected on a touch pad (4), comprising the steps of - detecting the drawing of a first portion of a symbol, - comparing the first portion of the symbol with a specific library including symbols corresponding to the selectable aspects using pattern recognition, said specific library being automatically selected depending on the aspects selectable.

## Description

### Field of the invention

The present invention relates to a method for selecting among different aspects in an appliance system of a vehicle. The invention further relates to a system using said method.

### Background of the invention

In modern vehicles, the number of driver-controlled functions, such as infotainment systems, radio, cd, telephones, navigation systems etc, is steadily increasing. To control these functions, some attention is naturally required from the driver. However, since the driver ought to focus his/her attention primarily on the surrounding traffic situation, it is desirable that the control systems for the above-mentioned functions should be designed so as to distract the driver as little as possible when driving.

Two useful features for achieving this purpose have previously been identified. Firstly, it is desirable that the functions should be controllable while enabling the driver to remain focused on the surrounding traffic situation, i.e. to keep his/her eyes on the road. Secondly, it is desirable that the control of the functions should have little or no impact on the driver's ability to quickly execute driving manoeuvres. In addition, for minimising the attention required to control the functions, the control system should preferably be easy to learn and intuitive to handle. Numerous control systems have been proposed to fulfil the above requirements, with varying success.

One known system is a system for handwriting recognition, including a screen arranged at the lower portion of the vehicle's windscreen, in combination with a selection knob arranged in the centre console next to the driver's seat. The screen displays information such as menus, data entry and maps to the driver. The selection knob is used to enter information to the control system. To this end, the selection knob is provided with a circular touch pad on which the driver may write or draw symbols used to control the system. In addition, pre-assigned or freely programmable function buttons are positioned next to the selection knob allowing for specific applications, such as the navigation system or the radio to be selected.

The user may write letters or symbols directly on the circular touch pad of the selection knob, which uses handwriting recognition software to identify what is written. For providing feedback to the user, an audible system may be connected to the control system, which audibly states the command which has been entered via the circular touch pad.

The system is customizable, so that a driver may select how to work with it, ascribing a desired meaning to specific symbol or characters.

Using the system as described above, the driver is obliged to adjust control devices arranged on the steering wheel, the centre console, and the transmission tunnel. Accordingly, the driver moves his/her hand between these different areas for adjustment of the control devices. Also, the driver might have to alter the focus of his/her visual field to varying areas in order to correctly perform the desired adjustments.

Other systems have been proposed, where a touch pad for input of information to a control system is provided on the steering wheel of the vehicle. These systems have the advantage that the driver may use the touch pad without removing his/her hands from the steering wheel.

WO 01/45080 (Automotive Technologies International Inc) describes such a system, which includes a head-up display system for projecting text and/or graphics into a field of view of an occupant of the vehicle, and a touch pad arranged on a steering wheel enabling the occupant to interact with the head-up display system to change the text and/or graphics projected. The head-up display may e.g. show a set of buttons, between which the occupant may select by tapping on a corresponding area of the touch pad. After a first selection, the head-up display may show a new set of buttons corresponding to a second selection.

US 6 373 471 (Palalau et al.) describes a system using a touch screen which displays varying sets of buttons for different situations. In addition, select switches or a mouse device may be arranged to control different features.

US 6 157 372 (TRW Inc) describes a touch pad system that may be arranged on a steering wheel for input of instructions to a control system. The touch pad has an array of manually touchable areas that are arranged such that various swiping and non-swiping manual touch patterns to the array can be accomplished. The touch patterns include touch patterns which correspond to controllable aspects of the devices. An interpreter function is provided to interpret information so as to identify the touch patterns to the touch pad.

### Summary of the invention

In view of the above, it is an object of the present invention to enable enhancement of a control system for a vehicle in one or several of the above-mentioned aspects.

In a first aspect of the invention there is provided an input device for arrangement in a vehicle passenger interior compartment and for receiving input to select among different selectable aspects of an appliance system in a vehicle, the input device comprising a touch pad being assigned to a handwriting interpretation function for interpreting input to at least one area of the touch pad as one out of a library of symbols corresponding to the selectable aspects. The input device further comprises fixed plus/minus buttons enabling gradual adjustment of said aspects.

The plus/minus buttons may be formed by areas of the touch pad being permanently assigned to a plus/minus interpretation function. Alternatively, the plus/minus buttons may be formed by keys being separate from the touch pad.

Advantageously, the input device may further comprise a menu button for causing a menu to be displayed. Preferably, the menu to be displayed may be automatically selected depending on the selectable aspects at a specific input step.

In one embodiment, at least one area of the touch pad may be assigned to a mouse command interpretation function, interpreting input to the at least one area of the touch pad as mouse commands such as pointing, selection or scrolling commands. The handwriting interpretation function and the mouse command interpretation function may advantageously be alternatively assigned to one mutual area of the touch pad. Selection between the drawing interpretation function and the mouse interpretation function may be made automatically depending on the selectable aspects at a present input step of a control procedure. Alternatively, or in addition to the automatic selection, selection between the drawing interpretation function and the mouse interpretation function may be performed manually.

In one particular embodiment, the drawing interpretation function may be assigned to a first area of the touch pad, and the mouse interpretation function may be assigned to a second area of the touch pad.

Advantageously, the handwriting interpretation function may use pattern recognition to interpret a symbol being drawn on the touch pad by comparing the drawn symbol to a library of symbols corresponding to different selectable aspects.

Advantageously the interpretation function, during input of a symbol on the touch pad (4), compares the drawn portion of the symbol to a library of symbols using pattern recognition, and selects a subset of possible matches from said library of symbols.

Preferably, the input device may comprise at least one button for confirming input to the touch pad areas.

Advantageously, the input device may comprise at least one button being assigned to a specific select or control function.

In a second aspect of the invention there is provided a system for arrangement in a vehicle for selection and/or control of different selectable aspects of an appliance system in said vehicle, comprising a display, and an input device as described above, said display displaying images based on input received by the input device.

The input device may preferably be arranged on a steering wheel of a vehicle. The display may advantageously be arranged in the vehicle in the vicinity of a driver's normal viewing area when driving.

Preferably, the appliances to be controlled include at least one of a radio, a telephone, a cd player, and a navigation system.

In a third aspect of the invention, there is provided a method for selecting among different aspects in an appliance system of a vehicle by detecting a symbol corresponding to the aspect to be selected on a touch pad, comprising the steps of
- detecting the drawing of a first portion of a symbol
- comparing the first portion of the symbol with a specific library including symbols corresponding to the selectable aspects using pattern recognition, said specific library being automatically selected depending on the aspects selectable.

Advantageously, the method comprises repeating the comparison with the specific library during the continued drawing of the symbol. Preferably, the method may further include selecting a subset of possible matches from the specific library based on said pattern recognition.

The subset of possible matches may advantageously be displayed to the user.

Preferably, during continued drawing of the symbol after the selection of a first subset of possible matches, comparison may be made to the first subset of possible matches wherefrom a selection of a second subset of possible matches is made.

The comparison of the drawn portion of the symbol with the specific library or relevant subset of symbols may advantageously be continuously repeated during drawing of the symbol. Thus, comparison may take place with a certain interval, e.g. a time interval or a distance interval on the touch pad, substantially continuously until the drawing of the symbol is finished or until the symbol is identified.

It is preferred that the selectable aspects include appliances and/or features of appliances.

Advantageously, each symbol in a specific library of symbols is assigned to a specific aspect. Further, one and the same symbol may preferably be assigned to different aspects in different specific libraries. In a preferred embodiment, each specific library includes a number of symbols corresponding to the number of selectable aspects.

At least one library of symbols may advantageously comprise letters and/or numerals and/or symbol characters. At least one library of symbols may advantageously comprise symbols being pre-defined by a user.

In a fourth aspect of the invention, there is provided a system for arrangement in a vehicle for control of an appliance system in a vehicle, said system comprising a touch pad and a display, said touch pad being associated with an interpretation function for interpreting input in the form of symbols drawn on the touch pad, and said display displaying images based on input received by the input device, wherein the interpretation function is adapted to execute a method as described above in relation to the third aspect of the invention.

In a fifth aspect of the invention, there is provided a method for providing feedback to a user selecting among different selectable aspects in an appliance system in a vehicle by drawing a symbol corresponding to the aspect to be selected on a touch pad, comprising the steps of,
- detecting the drawing of a first portion of the symbol on the touch pad
- comparing the first portion of the symbol with a library including symbols corresponding to the selectable aspects using pattern recognition,
- selecting a subset of possible matches from said library of symbols
- displaying the subset of possible matches to the user.

Preferably, the method comprises the step of displaying the drawn first portion of the symbol to the user.

Advantageously, the subset of possible matches may be displayed so as to be selectable by the user.

Preferably, the subset of possible matches may be displayed as alternative continuations of the part of the symbol already drawn. Most preferred, the subset of possible matches are displayed so as to be distinguishable from the part of the symbol already drawn.

Advantageously, the method comprises that, during continued drawing of the symbol after the selection of a first subset of possible matches, comparison is made to the first subset of possible matches wherefrom a selection of a second subset of possible matches is made, said second subset being displayed to the user.

Advantageously, comparison of the drawn portion of the symbol with the library or relevant subset of symbols is performed substantially continuously during drawing of the symbol.

Preferably, the symbols are drawn on a touch pad, and displayed on a display being separate from the touch pad.

The library of symbols may advantageously comprise letters, numerals and/or customised symbols defined by a user.

In a sixth aspect of the invention there is provided a system for arrangement in a vehicle for control of an appliance system in a vehicle, said system comprising a touch pad and a display, said touch pad being associated with an interpretation function for interpreting input in the form of symbols drawn on the touch pad, and said display displaying images based on input received by the input device, wherein the interpretation function is adapted to execute a method in accordance with the fifth aspect of the invention as described above.

It is to be understood, that features described in relation to one of the different aspects of the invention may be combined with features described in relation to any of the other aspects of the invention. A person skilled in the art will readily be able to combine features so as to enhance the control of a control system for appliances in a vehicle.

In the following, various embodiments of the different aspects of the invention will be described as non-limiting illustrative examples and with reference to the drawings wherein:

### Brief description of the drawings

Fig. 1 illustrates an embodiment of a control system comprising an input device and a display.
Fig. 2 is a detailed view of the input device of the system illustrated in Fig. 1.
Fig. 3 illustrates an embodiment of a display of an input device, when a first portion of a symbol is drawn.
Fig. 4 illustrates the display of Fig. 3 when an additional portion of a symbol is drawn.
Fig. 5 illustrates a flow chart of an exemplary control system with different libraries of symbols for different expected input.

### Detailed description of preferred embodiments of the invention

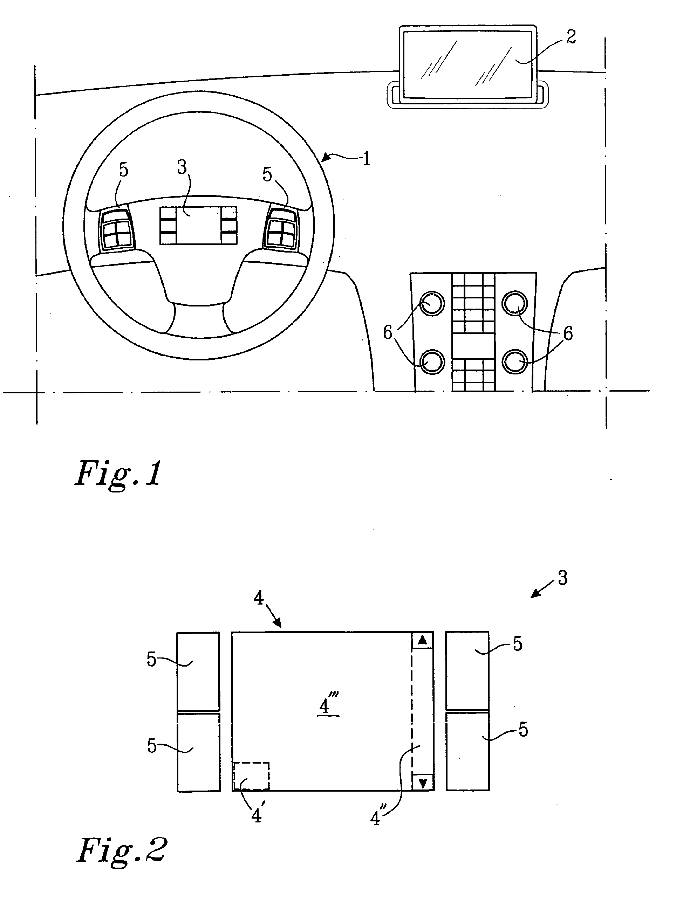

In Fig. 1 a system for selection and control of different selectable aspects in an appliance system in a vehicle is disclosed. With appliance is meant a general system or part of a system, such as an infotainment system, an audio system, a rear seat entertainment system, a windows control system, a telephone system or a navigation system. An appliance such as the infotainment system may comprise several sub-appliances, such as a CD appliance and a radio appliance, between which the user may wish to select. Each appliance has a number of controllable features. After selection of e.g. the CD appliance, the user might want to select a particular track or adjust the volume. The track selection as well as the volume are controllable features in the sense of this application. The windows appliance has controllable features such as selection of window and control of the up or down state of the window. For the telephone system, the user might want to select among features such as "call", "call back", "answer", to input or select a telephone number or to select a number in a telephone directory. In addition, the user might want to adjust the volume or select speaker mode. To use the navigation system, the user might want to input addresses and ask for directions.

The term "aspect" as used herein includes features and/or appliances of an appliance system.

It will be understood that the above-mentioned appliances and features are non-limiting examples only, and that a great variety of appliances and features may be considered for use in a vehicle. In addition, it will be understood that the appliance system is preferably a system for control of more than one general system, such as a system for control of the infotainment system and the navigation system.

In an embodiment of a system illustrated in Fig. 1, an input device, generally denoted 3, is arranged in this case in the centre of a steering wheel 1 of the vehicle. This particular location of the input device is advantageous since it enables the driver to input the device without moving his/her hands from the steering wheel. However, other locations could be considered such as other positions on the steering wheel, or even elsewhere in the vehicle such as on the centre console. The centre console location is however believed to be less advantageous than the steering wheel location, in view of the need to change positions of the hand back and forth from the steering wheel.

In the illustrated embodiment, the system further comprises a display 2 being associated with the input device and used for displaying various kinds of information related to e.g. states of the controllable aspects, adjustment of the aspects, or other information to the driver such as maps. The display 2 is preferably arranged adjacent to, or in the lower portion of, the windscreen, so as to enable the driver to glance at the screen with limited downward vision while still keeping his/her eyes on the road. Thus, the display may be located in the vicinity of the field of view of the driver when driving. In the illustrated embodiment, the display is a pop-up screen 2. Alternatively, other types of screens may be considered, such as e.g. a fixed screen, a screen integrated with the windshield or a screen projected on the windshield.

The input device 3 is adapted to receive input in the form of strokes or taps on a touch pad 4 (Fig. 2), and to interpret the input for controlling the features and appliances associated with the input device.

In order to facilitate control of a number of different features and appliances using the input device, it is advantageous if the input device comprises a touch pad being assigned to a handwriting interpretation function interpreting input to at least one area of the touch pad as one out of a library of symbols corresponding to the selectable aspects for selection or control of features and appliances, and the input device further comprising fixed plus/minus buttons enabling gradual adjustment of said aspects. With gradual is meant incremental or decremental change either in a stepwise or stepless fashion.

Using the handwriting input function, the user may select aspect directly, in contrast to other types of selections such as picking an item out of a list or menu. When using the handwriting input possibility, a minimum of input steps will be necessary to control a selected appliance of feature in a particular system and system configuration.

The gradual adjustment possibility as provided by the plus/minus buttons is also advantageous, and provides an adjustment possibility that may be difficult to achieve using handwritten symbols only. For example, when adjusting the volume of the radio a gradual adjustment possibility which may be terminated when a desired volume level is reached is generally appreciated.

The gradual adjustment method thus complements the previously mentioned handwriting control method of writing commands on a handwriting area. Thus, the input device provides two different input possibilities: by means of symbols to the handwriting area, or by means of the plus/minus buttons. Using the handwriting area, the user may directly enter the desired command at any input level of a control system, whereby the selection of aspect may be performed using a minimum of commands. With the plus /minus buttons, the user may instead gradually adjust different aspects. Accordingly, the input device 3 provides double input possibilities to the benefit of the user.

Further, an additional advantage with the combination of a handwriting area and plus/minus buttons as described above is that the two input possibilities are especially suitable for controlling different features with little or no need to look at the display. Symbols may clearly be written on the touch pad without need of viewing the display during input. If desired, correct interpretation of the written input may be verified by a quick glance at the screen. Optionally, an audible system could read out the interpretation of the written input. Further confirmation possibilities will be described in more detail below.

When the plus/minus buttons are used for gradual adjustment of e.g. volume, state of windows etc. there is also little or no need for verification by looking at the display. Thus, the optimal mode for using the system would be to select features by using the handwriting area, and thereafter to perform adjustments on a scale such as volume, heat etc. using the plus/minus buttons.

In addition to the gradual adjustment possibility, the plus/minus buttons may be used to scroll up or down in menus for selecting a desired feature or appliance. This option might be particularly suitable if the user does not recall the symbols to use at the relevant stage of an input process or if the user is not yet acquainted with the system. When using the scrolling possibility, it might be suitable to occasionally glance at the display in order to find the desired aspect/adjustment. This procedure is however simplified in that the sequential stepping through the menus enables the driver to effectively search through menus and lists without losing his/her way in the system. The driver may perform the scrolling in subsequent steps, which allows the driver to interrupt the scrolling if the traffic situation requires more immediate attention, and to resume scrolling when the traffic situation is calmer.

The plus/minus buttons may be provided as parts of a touch pad area, being permanently assigned to a specific plus/minus interpretation function. Thus, input to said touch pad area is interpreted according to the corresponding interpretation function, regardless of which appliance or feature is to be controlled. This results in a comprehensible system, where the plus/minus control is fixedly located, so as to be easily manoeuvred by the user. Accordingly, the driver may perform adjustments of different features with less distraction from the actual driving.

Alternatively, the plus/minus buttons may be provided as fixed physical keys.

In the embodiment illustrated in Fig. 2, the input device 3 comprises a touch pad 4 having three different touch pad areas 4', 4", 4"'. Each of the touch pad areas 4', 4", 4"' is assigned to interpretation functions being different from the interpretation functions of the other areas. Thus, input in the form of strokes or taps to one of the touch pad areas 4', 4", 4"' will be interpreted differently than the same input given to any one of the other two touch pad areas.

In the embodiment of Fig. 2, a first touch pad area 4' is a menu area, being permanently assigned to a menu display interpretation function. Input to this first touch pad area 4' will be interpreted as an instruction to display or not to display a menu to the user. As an example, a first tap on the area may mean that the menu should be displayed, and a subsequent tap on the area could mean that the menu should be extinguished.

As an alternative to the menu area, a physical menu key could be provided for displaying menus when desired.

A second touch pad area 4" is in this case a plus/minus area, being permanently assigned to a plus/minus interpretation function which interprets input as meaning "plus" (increase/scroll up) or alternatively "minus" (decrease/scroll down) as described above. The second touch pad area 4" may, as illustrated, be elongate and have a first portion constituting a plus area and a second portion constituting a minus area. Touching the first portion will result in the input being interpreted as meaning "plus", and touching the second portion will result in the input being interpreted as meaning "minus". Alternatively, the interpretation function associated to the second touch pad area 4" may interpret an upward stroke on the pad area 4" as meaning "plus" and a downward stroke on the pad area 4" as meaning "minus". Increase and decrease could mean different things depending on the appliance and feature being adjusted. For example, if the radio is adjusted, increase/decrease may be interpreted as an instruction to increase or decrease the volume. If instead the navigation system displays a map, increase or decrease may mean increase or decrease scale (zoom in/zoom out). As alternatives to the vertical configuration of the second touch pad area 4" illustrated in Fig. 1, many other configurations including a left/right configuration are of course possible.

As an alternative to the plus/minus area, a physical key or keys could be provided for enabling the plus/minus function.

One of said touch pad areas, in this case the third area 4"', may be a handwriting area, being assigned to a handwriting interpretation function for interpreting an input drawn on the handwriting area as being one out of a library of symbols corresponding to the selectable aspects of the system. Preferably, the input device may use pattern recognition when comparing the drawn symbol to the library of symbols. The library of symbols may advantageously be selected depending on the available selectable aspects at the present step in an input procedure, which will be described in more detail below.

In the illustrated embodiment, the touch pad areas 4', 4", 4"' are areas being defined on one single touch pad device 4. Although this embodiment is preferred, it is possible to design an input device wherein one or several touch pad areas consist of separate touch pad devices. Also, as mentioned above, some of the areas may be replaced by physical keys.

As described above, input to the plus/minus area 4" and to the menu area 4', respectively, is interpreted according to the corresponding interpretation function, regardless of which appliance or feature that is to be controlled. In other words, the menu area 4' is permanently used as a menu area, regardless of which appliance is to be controlled, e.g. the navigation system or the infotainment system. Similarly, the plus/minus area 4" is permanently used as a plus/minus area, regardless of whether it is e.g. the volume of the CD or the volume of telephone that is to be controlled, or the up/down state of the windows to be controlled or up/down scrolling in menus of the different appliances is to be performed.

The handwriting area 4"' is, as described above, a drawing area on which symbols may be drawn. However, the symbols drawn on the drawing area may have a different meaning depending on the context in which they are drawn. For example, drawing the letter "A" on the drawing area 4"' when searching in the telephone directory might be an indication that a call to a person whose name starts with the letter A is to be made. Drawing an "A" when selecting radio channel might mean that it is desired to listen to channel "A". This will be described in more detail later on in this application. Nevertheless, the drawing area 4"', may be used for drawing symbols to control different applications and features.

Optionally, at least one area of the touch pad may be assigned to a mouse command interpretation function. In this area of the touch pad inputs are interpreted as mouse commands such as pointing, selection or scrolling commands.

In one embodiment, a handwriting interpretation function and a mouse command interpretation function are alternatively assigned to one mutual area of the touch pad. Thus the same area, which in the illustrated embodiment is the largest touch pad area 4"', could alternatively function as a mouse area or as a handwriting area. The selection of which interpretation function to use in a specific situation may be made automatically, and depending on which type of input is expected by the system at a certain input step. Alternatively or in addition to the automatic selection, the selection between a "handwriting mode" and a "mouse mode" for the touchpad area 4"' may be made manually, e.g. by pressing a selection button or the like.

Accordingly, efficient use of the touchpad area 4"' is enabled. The use of a touch pad area as a handwriting area and a mouse area is particularly advantageous in combination with plus/minus buttons as described above, since this combination provides a system enabling swift and uncomplicated control of different aspects. However, the combination of a handwriting area and a mouse area may also be used without plus/minus buttons as described above. In this case, plus/minus could still be accomplished e.g. when the area is used in a mouse mode by using specific taps or strokes.

An input device as described above has the advantage of being relatively easy to learn to handle. Essentially, the input device works in the same way, regardless of which appliance or feature is to be controlled. Thus the appearance of the touch pad is stable, and the function is easy to grasp intuitively.

In addition to the touch pad, the input device may advantageously comprise keys 5. In the illustrated embodiment, two keys 5 are present on each side of the touch pad 4. The keys may be assigned to selected specific features that are frequently to be controlled, thus providing short cuts the selected features. Keys could also be assigned to general functions, e.g. a confirmation key as will be described in the following, a menu key, or plus/minus keys as described above.

Regardless of whether any keys are used as short cuts to specific features or not, at least one key may be provided to effect a "confirm" function, with which a user may confirm the input made via one of the touch pad areas 4', 4", 4"'. If for example the user has drawn a "T" on the drawing area with the intention of selecting the telephone appliance, the system may be configured so as to require a confirmation before continuing with selection of features of the telephone appliance.

The confirmation could be enabled in different ways. The system may display the word "telephone" or a symbol for it on the pop-up display 2, to indicate that it has received the input drawn. Also, the system may be combined with an audible system that emits a word such as "telephone" via speakers in the vehicle. Regardless of the way in which the system suggests the "telephone" appliance to the user, he/she may confirm the selection by pressing the confirmation key.

As an alternative, confirmation may be made by e.g. tapping on the touch pad or touching a specific area of the touch pad. However, use of a confirmation key has the advantage of being more reliable and less prone to unintended inputs than a touch pad. Unintended inputs to a touch pad may be caused e.g. by movements of the vehicle during driving causing a user's hand to shake or simply by unintended brushing against the pad.

If the input system is combined with an audible system as suggested above, the confirmation could alternatively be made vocally, e.g. by responding "yes" when he system suggests an interpretation of the input. However, it is preferred that audible commands are always combined with alternative, "silent" commands so that the audible system may be turned off if desired, such as e.g. when there are passengers having a conversation or sleeping in the vehicle. Thus, it is preferred that the audible system is used only as an optional complement to a silent system.

In the illustrated system, in addition to the input device 3 there are alternative input devices 6, schematically illustrated in the form of knobs, arranged in the centre console of the vehicle. The alternative input devices 6 are primarily intended to be used by a passenger in the vehicle, whereas the driver could advantageously use the input device 3. The alternative input devices 6 could of course be of a similar design as the input device 3. However, since the passenger need not focus his/her attention on driving, many conventional design options may also be suitable for the alternative input devices 6.

Further, the system may provide additional input possibilities via a remote control. The configuration of an input device suggested above is particularly advantageous for a remote control since it does not require much space and may be designed to include relatively few buttons. In a preferred embodiment, a system is provided having a remote control with an input device being similar to the input device designed for use by the driver of the vehicle.

As mentioned above, input to a system for selection and control of applications and features in a vehicle may be made via a drawing area 4"' of a touch pad. To interpret the input drawn on the drawing area 4"', the system may use an interpretation function for comparing the symbol to a library of symbols using pattern recognition. One particularly suitable way of using such an interpretation function will be described in the following. It is to be noted that although this function is suitable for use with a touch pad in an input device as described above, it is applicable for any type of input in the form of symbols to a touch pad in a vehicle.

According to the preferred method, the system may detect the drawing of a first portion of a symbol drawn on a touch pad. The drawn portion of the symbol may be compared to a library of symbols using pattern recognition. That the interpretation starts during the input of the symbol, i.e. before the entire symbol is drawn, means that the drawn portion of the symbol is not a complete symbol, but only a first portion thereof when the comparison begins.

Advantageously, the drawn portion of the symbol may be displayed to the user. The user is thus provided with immediate feedback of his/her handwriting on the touch pad.

When the drawn portion is not a complete symbol, it may correspond to several of the symbols available in the library, each of these symbols having some feature corresponding to the drawn portion. These symbols are referred to as a subset of possible matches to the symbol being drawn. Advantageously, the system may display the subset of possible matches to the user, so that he/she is made aware of the way in which the system has started interpreting the drawing on the touch pad. Thus, the user is made aware of the interpretation of the input early on during the drawing and may immediately interrupt the drawing if he recognises that the system will not be able to interpret the input as intended. In addition, the display of possible matches during input of the symbol enables the user to understand how the system works, and gives an indication of how to adjust his/her drawing to achieve a correct interpretation by the system. Accordingly, the display of the subset of possible matches provides feedback to the user, helping him/her to learn how to control the system associated with the input device.

Displaying the subset of possible matches is also useful when the system makes a correct interpretation of the drawn portion of the symbol. First, the user is given a feedback that the system interprets the symbol as intended. Further, the subset of possible matches may optionally be displayed so as to be selectable by a user. In this way, the user will not have to continue to draw an entire symbol, but could draw only a portion of the symbol and then select between a number of optional symbols as presented by the system.

The system may advantageously compare the drawn symbol to the library substantially continuously during the drawing thereof, and display possible matches as the drawing progresses. Thus, the number of possible matches displayed will be relatively large at the start of the drawing, and will diminish as the drawn symbol is completed. Ideally, only one match will remain when the user has finished drawing the symbol. If the possible matches are displayed so as to be selectable by the user, he may interrupt the drawing of the symbol at any time and select the intended symbol directly among the possible matches presented.

Alternatively, the interpretation function might require a minimum portion of the symbol to be drawn before the interpretation starts.

A reset function may advantageously be provided to clear and reset the input device if the interpretation of the drawn symbol is not as intended by the user. To this end, a reset button (e. g. touch pad or key) may be arranged.

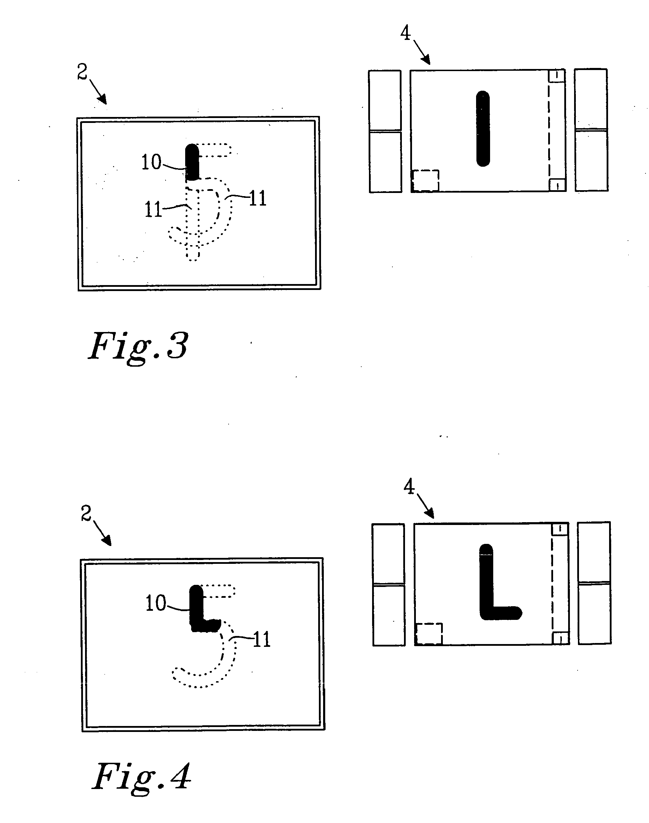

An embodiment using the above-described method for providing feedback to a user giving input in the form of symbols to a touchpad is illustrated in Figs. 3 and 4. In Fig. 3 the user has started drawing a symbol on the touch pad 4, by drawing a short vertical line. In this example, the relevant library of symbols to use for interpreting the drawn symbol includes digits only, which could be the case e.g. if the user wishes to enter a telephone number. Other forms of libraries of symbols to use for the interpretation are of course possible and some examples will be described later on in this application.

The vertical line being the drawn portion of the symbol is thus compared to a library comprising the digits 0-9. In this case, the interpretation system finds two possible matches, the digits 1 and 5. Thus, the digits 1 and 5 are both displayed to the user on the pop-up screen 2.

In the example of Fig. 3, the drawn portion of the symbol is displayed to the user as a trace 10, and the subset of possible matches 1 and 5 is displayed as possible continuation traces 11 of the part of the symbol already drawn. Preferably, the continuation traces 11 are displayed so as to be distinguishable from the part of the symbol already drawn 10. This could be accomplished e.g. using different brightness, width or color of the suggested continuation traces 11 as compared to the "drawn" trace 10.

As illustrated in Fig. 4, the user may simply continue to draw the intended symbol. Eventually, the portion drawn will match only one digit in the library, in this case the digit 5. When only one option appears on the screen, the user may choose to confirm this symbol e.g. by pressing a confirm key, tapping on the touch screen or using some other means of activating a selection. Alternatively, the system may be arranged such that the user may select between the two possible matches 1 and 5 e.g. by tapping on one of them.

The above-mentioned example illustrates how using pattern recognition for interpretation during the input of the symbol may shorten the time needed for performing a selection of a symbol and remove the need for entering the entire symbol via the touch pad. Thus, input to a drawing area of a touch pad is generally simplified.

In the example of Figs. 3 and 4, the symbols are drawn on a touch pad 4 and displayed on a display 2. As an alternative, the symbols may be drawn and displayed on a touch screen. For use in a vehicle, the second option is however normally less advantageous, as it will require the user to enter information via touch patterns to a device which must also be easy to view, which renders optimum placement of the touch screen in a vehicle difficult.

Methods where the drawn portion and/or the subset of possible matches are displayed as continuations of the drawn portion of a symbol are primarily intended for providing feedback to a user during a learning phase, in which the user learns how to handle the system. Thus, the display of portions of symbols may be regulated by a safety control system which enables display e.g. only when the vehicle stands still.

For the interpretation of input in the form of symbols being drawn on a touch pad, different libraries may be used for comparisons as mentioned above. Preferably, these libraries may be made context-sensitive so that they include only symbols that are relevant for the feature and appliance that is to be controlled by the system at a specific moment. A simple example of this is e.g. in a telephone system. If the user has selected to enter a telephone number, the system will expect input in the form of digits and therefore compares the input with a library comprising the digits 0-9. If instead the user has selected to look up a name in a telephone book, the system will expect input in the form of letters and therefore compare the input with a library comprising the letters of the alphabet.

The selection of libraries may however be made more sophisticated to speed up the system and lessen the time required to perform a selection or control.

Since a control system may be used to control a number of different appliances in the vehicle, such as radio, cd, telephone, navigation system, seat heating, and windows etc., the system may require input at a great number of different selection or adjustment steps. In each of these selection of adjustment steps, different input may be expected depending on the relevant selection or adjustment situation.

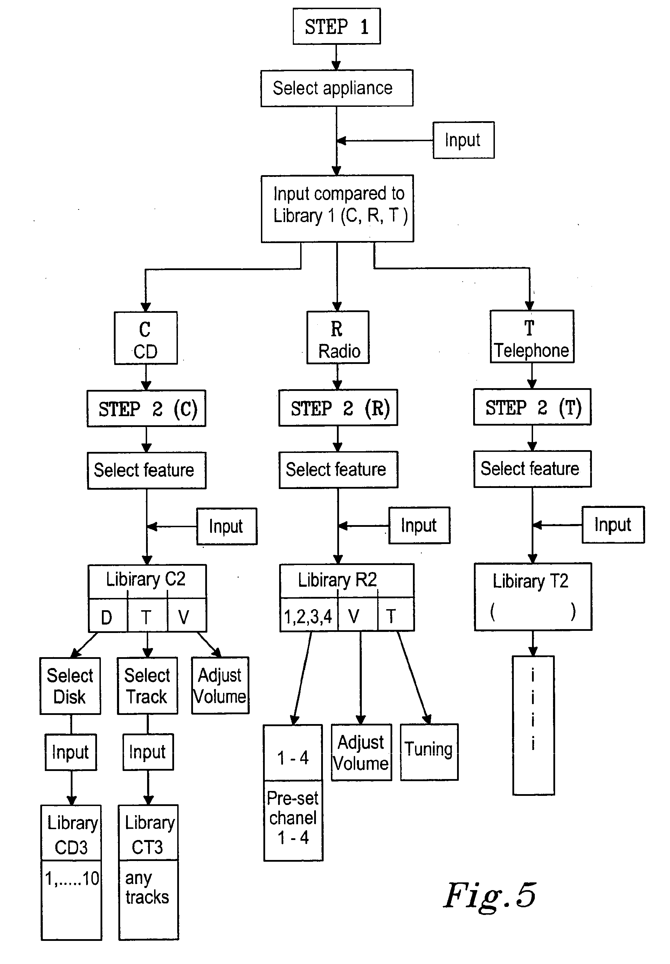

For example, a first selection to be performed when using a control system might be the selection of an appliance to be controlled. In an example embodiment illustrated by the flowchart of Fig. 5, a system is used to control three appliances: CD, radio and telephone. In this case, the first library could include the letters "C" for CD, "R" for radio and "T" for telephone only.

It is readily understood that the use of a first library including only three letters will considerably speed up the interpretation as compared to a library including e.g. all the letters of the alphabet. This is particularly the case if the library is used in combination with interpretation of the drawn symbol during drawing thereof as described above.

Once the first selection of the appliance is made, the options available will be different depending on the different controllable features associated to each appliance. If for example the radio function is selected, it may be desired to select between different radio channels or to adjust the volume. On the other hand, if the telephone function is selected, it may be desired to enter a phone number or a name of a person in a telephone directory. To continue the example, if it is assumed that the radio has been selected by the user entering "R", in a subsequent input step the user may choose from pre-selected channels by drawing a digit on the touch pad. If the user wishes to adjust the volume, he might draw a "V" for volume and then make an adjustment up or down, e.g. using an up/down section of the touch pad as described above. Alternatively, the system may be configured such that input to the up/down section is always interpreted as a volume adjustment if the radio appliance has been previously selected.

In the illustrated system, an appliance is firstly to be selected as described above. For performing the selection of appliance, the input drawn on the touchpad is compared to the contents in a first library, Library 1, which includes the three symbols: "C," "R" and "T" corresponding to the three selectable appliances. Depending on which appliance is selected, the system will expect different input in a secondary step. This is reflected in the different libraries associated with the second input step. If the CD player appliance had been selected in the first step, the second library associated with the CD player, Library C2, may include symbols such as "D" for select disc, "T" for select track on the current disc or "V" for adjust volume. If instead the radio appliance was selected in the first step, the second library associated with the radio, Library R2, may include symbols such as the digits 1-4 for selecting pre-selected channels 1 to 4, "V" for adjusting the volume or "T" for tuning.

Similarly, different libraries may be defined for each input step of the system. It is to be understood that the options for structuring the system are endless, and that libraries of numerous sorts are possible.

Thus, at each step where input is expected from a user, a specific library may be defined, including symbols corresponding to selectable aspects being relevant to perform the selection or control intended at that input step. Preferably, each specific library includes a number of symbols corresponding to the number of selectable aspects that are available at the corresponding input step. Accordingly, the search for matches is rendered highly efficient. As mentioned above, this is particularly advantageous in combination with interpretation by pattern recognition being performed during input of the symbol, i.e, by starting the comparison with the library already when only a portion of the symbol has been drawn.

As is understood from the example, a symbol such as "T" may be assigned to different select or control functions in different specific libraries. In the first library, T is assigned to the function of selecting the telephone. In the second library, T is assigned to the tuning of the radio.

Returning to the example of Fig. 5, it relates primarily to input being entered via a drawing area of a touch pad, where the input drawn is to be interpreted by comparison with a library of symbols. This type of input may, as in the touchpad having different designated areas being described above, be combined with other types of input, such as the input from a designated touch pad area for up/down selection. In this case, it might be preferred to use the up/down area for adjusting e.g. the volume of the CD, radio or telephone of the system in Fig.5. Likewise, the up/down area could alternatively be used to scroll between the options available in a library. Also in this case, it is an advantage if each library includes only relevant symbols, as it will diminish the need for scrolling up or down to find the desired symbol in the library.

Further, it may sometimes be desired to input strings of symbols. Such a string could correspond for example to a name or to a complete telephone number. In these instances, a string library could comprise a number of expected input strings, such as e.g. the names in a telephone directory. As a first symbol is drawn, a first selection from the library is made based upon the first symbol. Possibly matching strings creates a secondary library being a selection of the initial library. When the second symbol of the string is drawn, this symbol is compared to the symbol in the second position of the strings in the second library, and so on until the correct string is defined.

Advantageously, the systems may be combined with an overload safety system, which limits the amount of information to be displayed to a user in a certain situation, or which overrides the display of information relating to the appliances in order to display more vital information to the driver, such as information about potential engine problems or traffic situation alerts. The overload system may also enable some types of information to be displayed only in specific situations such as when the vehicle is standing still or travelling at rather low speed.

For the touch pads as described in this application, resistive or capacitive touch pads are preferred although other technologies may be used.

When a touch pad is, as described above, mounted on the steering wheel, the location of the touch pad should be selected taking any airbag means into account. Generally, a touch pad could advantageously be mounted on the airbag cover such that it folds away when the airbag is deployed. Advantageously, the touch pad could be mounted on the upper part of the airbag cover.

## Claims

1. Method for selecting among different aspects in an appliance system of a vehicle by detecting a symbol corresponding to the aspect to be selected on a touch pad (4), comprising the steps of
- detecting the drawing of a first portion of a symbol
- comparing the first portion of the symbol with a specific library including symbols corresponding to the selectable aspects using pattern recognition, said specific library being automatically selected depending on the aspects selectable.

2. Method according to claim 1, comprising repeating the comparison with the specific library during the continued drawing of the symbol.

3. Method according to claim 1 or 2, further including selecting a subset of possible matches from the specific library based on said pattern recognition.

4. Method according to claim 3, wherein, during continued drawing of the symbol after the selection of a first subset of possible matches, comparison is made to the first subset of possible matches wherefrom a selection of a second subset of possible matches is made.

5. Method according to any one of the previous claims, wherein the comparison of the drawn portion of the symbol with the specific library or relevant subset of symbols is continuously repeated during the drawing of the symbol.

6. Method according to any one of the previous claims, wherein the selectable aspects include appliances and/or features of appliances.

7. Method according to any one of the previous claims wherein each symbol in a specific library of symbols is assigned to a specific aspect.

8. Method according to any one of the previous claims, wherein one and the same symbol is assigned to different aspects in different specific libraries.

9. Method according to any one of the previous claims, wherein each specific library includes a number of symbols corresponding to the number of selectable aspects.

10. Method according to any one of the previous claims, wherein at least one library of symbols comprises letters and/or numerals and/or symbol characters.

11. Method according to any one of the previous claims, wherein at least one library of symbols comprises symbols being pre-defined by a user.

12. Method according to claim 3 or 4, comprising displaying said subset of possible matches to the user.

13. System for arrangement in a vehicle for control of an appliance system in a vehicle, said system comprising a touch pad and a display, said touch pad being associated with an interpretation function for interpreting input in the form of symbols drawn on the touch pad, and said display displaying images based on input received by the input device, wherein the interpretation function is adapted to execute a method in accordance with any one of the claims 1 to 12.
